Europäisches Patentamt

European Patent Office

Office européen des brevets

(19)

(11) Publication number: **0 432 108 A2**

# EUROPEAN PATENT APPLICATION

(21) Application number: **90830493.4**

(22) Date of filing: **30.10.90**

(51) Int. Cl.⁵: **G06K 9/80**

The title of the invention has been amended (Guidelines for Examination in the EPO, A-III, 7.3).

(30) Priority: **02.11.89 IT 4851489**

(43) Date of publication of application:
**12.06.91 Bulletin 91/24**

(84) Designated Contracting States:
**AT BE CH DE DK ES FR GB GR LI LU NL SE**

(71) Applicant: **SINCON S.p.A.**
**Via A. Serra, 62**
**I-00191 Roma(IT)**

(72) Inventor: **Michelangeli, Enzo**
**Via Fonte dell'Olio, 1**
**I-00153 Roma(IT)**

(74) Representative: **Lanzoni, Luciano**
**c/o Bugnion S.p.A. Piazza dei Re di Roma, 21**
**I-00183 Roma(IT)**

(54) **An electronic device for viewing, recognizing and localizing objects, and an operating procedure therefore.**

(57) Designed for use in the field of industrial control and robotics equipment, in viewing, recognizing and localizing objects, the electronic device consists essentially in an assembly of hardware and software facilities that permit of comparing and matching reference objects with those imaged by one or more television cameras; such facilities will comprise a CAD module for graphic simulation of the reference objects to be compared with those imaged by the canera, further modules capable of extracting arid displaying the graphic and geometrical features of the imaged objects, and a microprocressor connected by way of a dedicated bus to the various items of hardware, which, in conjunction with an appropriate software package, runs the entire procedure from initial programming and memorization of the graphic and geometrical features of the reference objects, through recognition, extraction and comparison to ultimate confirmation of the match between the imaged and object and its reference model.

EP 0 432 108 A2

# AN ELECTRONIC DEVICE FOR VIEWING, RECOGNIZING AND LOCALIZING OBJECTS, AND A RELATIVE OPERATING PROCEDURE

The invention relates to an electronic device for viewing, recognizing and localizing objects, of the type comprising at least one television camera by means of which to generate images, connected by way of a video interface with a monitor, and means for comparing and matching objects imaged by the camera with reference objects; the invention also embraces the relative operating procedure.

A particularly pressing problem experienced within the field of industry is mirrored in the search for systems by means of which to view a surrounding environment, whether in two or three dimensions, such as can measure up to the improved applications afforded by in-process robotics with the end in view of handling specific operational situations.

Viewing systems currently available, including two dimensional systems, are not refined sufficiently to respond with the requisite precision in the analysis of a specific object or of a narrow class of objects.

Moreover, when addressing objects of particular symmetry, or periodically occurring configurations of identical or similar objects, two- and three-dimensional imaging is particularly difficult, and recognition therefore becomes highly complex and none too reliable.

Imaging is accomplished currently using one or more cameras connected to special recognition processing systems capable of effecting a detailed, continuous analysis of an object sighted by the camera, though not an active analysis, i.e. not using a programmed set of selection parameters determining essential features to be isolated and compared.

Instead, such an analysis is conducted using all of the pixels (i.e. all of the elements making up the video image of the object received via the camera) regardless of whether or not a given part of the object is significant for recognition purposes or not.

Conventionally, the first step in the procedure consists in processing the information provided by the image, according to fixed operating parameters that cannot be altered according to the object or to suit particular operational contingencies, and comparing the recognized object with a reference image following each full processing operation.

With a system such as this, however, the time taken by the hardware to effect processing operations is excessively long in relation to the requirements of the application, resulting in high costs.

Finally, and to reiterate, the results obtained are not especially reliable despite the high levels of detail and accuracy; in situations where one has a multiplicity of notably similar objects, in fact, and in view of the enormous quantity of data that requires processing, and moreover, with a supply of information insufficient to permit of enabling the selection of more significant data specific to the features of the object imaged via the camera, the system can be led into drawing false conclusions.

In short, conventional object recognition processes often commit errors of gross character, which are unacceptable given the level of accuracy required, especially in the field of industrial automation.

From the foregoing, it will be seen that electronic devices of conventional embodiment for viewing, recognizing and localizing objects exhibit various limitations both from the processing standpoint and from that of the required quality of performance.

Being highly sophisticated, moreover, such devices require an extensive maintenance schedule, and thus are costly in the extreme when taken also in the wider context of the manufacturing operation.

The main object of the present invention is to overcome the difficulties described, and thus to eliminate the attendant drawbacks, by the adoption of an electronic device for viewing, recognizing and localizing objects that features simplicity in image processing and comparison, and versatility and flexibility to a notable degree in its ability to recognize any given object across the widest imaginable variety of applications.

To advantage, moreover, the comparison in question is an active procedure whereby the images of the scanned objects and preconstituted models of those objects are set one against the other in a series of discrete, guided operations. The object of the invention indeed is to create a system for viewing, recognizing and localizing objects wherein analysis of the camera image is effected by processing at a level lower than practised in conventional systems, but guided by an operating program through each processing step using data supplied by a reference model of which only those features essential to the particular application are defined and memorized.

Thus, comparison is geared to the matching only of essential and positively immutable features of the object and its model, rather than of an enormous range of data which for a variety of reasons, quite apart from the identity of the object, might differ ultimately from expectations to a greater or lesser degree. In short, the aim is to select and compare only that which is essential, without effecting calculations on irrelevant data, to the end of obtaining results undoubtedly at higher speed, but also of greater reliability, insofar as recognition unequivocally establishes the match between the imaged object and the previously constructed model, rejecting all approximations.

The stated objects, and other objects besides, are all realized in an electronic device for viewing, recognizing and localizing objects according to the present invention, of the type comprising at least one television camera by means of which to generate images, connected through a video interface to a monitor, and means by which reference objects are archived, compared and matched with objects imaged via the camera, which is characterized in that it comprises a microprocessor serving to execute a program for the operation of storage, comparison and matching means that comprise graphic simulation means capable of assigning geometrical features to reference objects with which objects imaged via the camera are compared, and means by which to observe and display graphic and geometrical features of the objects to be recognized and localized according to specifications and parameters established by way of the archived reference models and referred to at successive steps of the operating procedure, and in that the entire procedure is controlled via the operating program by the microprocessor, which is connected to the storage, comparison and matching means by way of a dedicated bus.

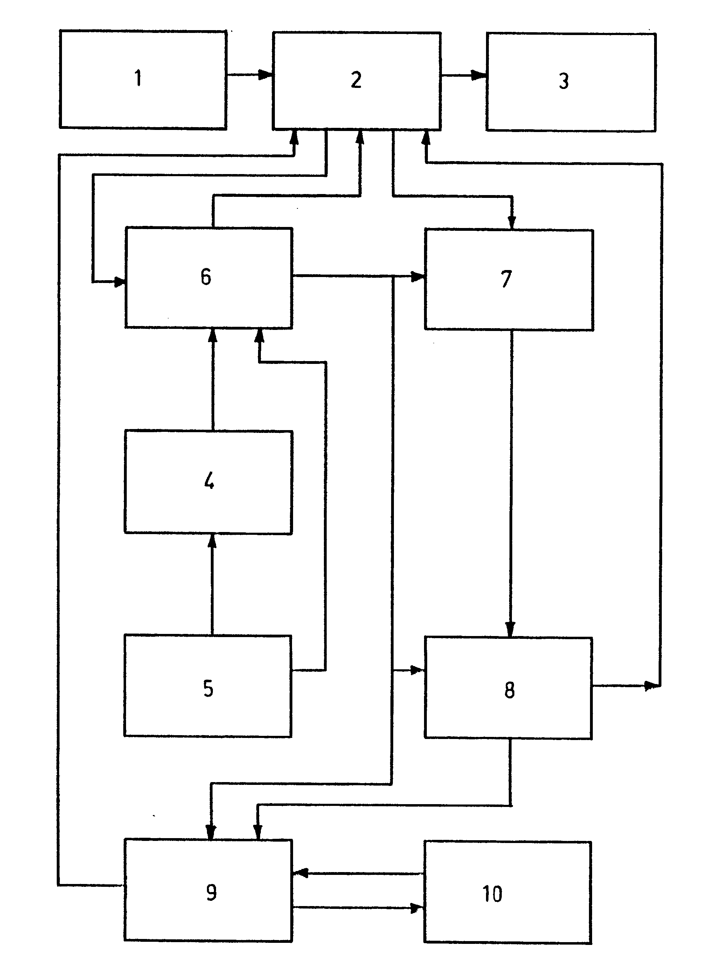

The invention will now be described in detail, by way of example, with the aid of the accompanying drawing, which is a block diagram of the viewing, recognition and localization device shown in a typical operating environment.

With reference to the diagram, 1 denotes a normal television camera, for example having a grey scale of 256, which might be utilized in conjunction with other cameras, the maximum number being four in the embodiment described by way of example, connected by way of a video interface 2 with a conventional VDU or monitor 3.

In accordance with prior art embodiments, the video interface will naturally incorporate the necessary analog-digital and digital-analog converters, which are not indicated specifically in the diagram.

The monitor is preferably a standard RGB colour graphics VDU.

The group of blocks numbered 4, 5 and 6 denote means for the graphic simulation of reference objects that will be compared ultimately with the objects imaged via the camera 1 during operation. denotes a conventional keyboard utilized by the operator in conjunction with the camera and the monitor to enter a complete set of parameters and specifications, selected according to the type of objects to be identified and to the particular application, into a memory denoted 6. These same parameters and specifications, which will reflect features essential to the subsequent recognition of a given object, may include thresholds, tolerances and dimensions, elementary geometrical figures into which the image can be split up, windows on areas comprising essential data, and parametric system data such as the specifications of the TV camera, its focusing distance, etc.. The keyboard 5 also serves to operate a conventional computer aided design (CAD) module 4, utilized to generate, alter and position such elementary geometrical features (circles, straight lines, angles, arcs) as may be essential to a correct identification of the target object; these same geometrical features are written into the memory 6, in association with the stored parameters and specifications aforementioned.

Accordingly, the memory 6 constitutes an archival storage medium holding such reference objects as have been defined and constructed in the manner outlined above.

Block 7 and block 8 respectively denote a contour extraction module and a features extraction module. During process operations, the first of the two blocks, i.e. the contour extraction module 7, makes an initial selection of pertinent areas from the digital image provided by the camera, on the basis of data supplied by the memory 6, and applies a gradient vector to these areas. In other words, an initial rough analysis is made of the grey shades in the image, whereupon the block 7 continues by singling out the characterizing points (vertices) of potential contours, according to the thresholds supplied by the memory 6, and correlating them. By this strategem, all such geometrical features as are particular to the image supplied by the camera will be selectively displayed, hence the notion of 'extraction'.

Thereafter, the features extraction module a runs a curvature analysis on the contours extracted by the first module 7, segmenting and extracting all such geometrical features (straight lines, circles, angles etc.) as correspond to those present in the model, or rather models, archived in the memory 6; thus, the process executed by this module 8 is also guided by the memory 6.

Block 9 denotes a matcher: in effect, a module that establishes which parts of the object coincide with the memorized reference model following comparison of the image targeted by the camera 1 and processed by the contour extraction and features extraction modules. The matcher 9 essentially verifies whether or not the camera image and the reference model can be superimposed, and in the event of the compared data coinciding, the image is rotated and traversed in relation to the model to establish details of the position of the object located and recognized.

Lastly, block 10 denotes a protocol conversion unit which translates externally derived commands (from robots or machines with which the device disclosed is associated) into commands intelligible to the viewing and recognition device operating program, and translates response data from the device itself into outgoing commands. Accordingly, this block 10 enables the necessary dialogue between the imaging system, which comprises the cameras and VDU, the comparison and matching system, comprising all of the remaining blocks previously mentioned plus an external microprocessor not illustrated in the diagram (in the interests of simplicity), and the surrounding environment.

Having thus described the device according to the present invention essentially in structural terms, there now follows a description of the operation of the various modules, and the relative operational procedure.

First and foremost, it should be explained that the device according to the present invention may be described as operating on two-and-a-half levels, in the context of a three dimensional imaging system.

"Two and a half" is taken to signify the definition of tolerance and calculation parameters in respect of the distance along the focal axis of the camera to the object, considered in relation to the plane dimensions of the latter.

Moreover, the device is characterized in that it executes an active type of graphic simulation, i.e. the comparisons between the models archived in the memory 6 and the images generated by the camera and displayed on the VDU are effected step by step in single matching operations, consisting in discrete superimpositions of the image and the initially constructed model taken from the memory 6.

Finally, it will be recalled that the device also comprises a microprocessor not illustrated in the diagram, connected through a dedicated bus to the blocks numbered 4...10, which it controls by way of an operating program permitting dialogue between the processor, the modules connected to the bus, and external devices.

Thus, the device receives protocol commands from the microprocessor and images from the camera, as well as data supplied from the memory 6 describing the reference model (entered from the keyboard 5 and the CAD module 4). The outputs from the device reflect the results of comparison displayed on tile monitor 3, plus responses and output data handled in the form of commands by the block denoted 10.

Once a given object has been targeted by the camera (where a plurality of cameras are in use, selection will be effected by a multiplexer), the relative analog signal is converted by an ADC into a digital signal; thereafter, the digital signal is converted by DAC into an RGB analog signal for transmission to the monitor 3.

At any given juncture, the operator can use the keyboard 5 to generate, modify and position the essential geometrical features enabling a detailed definition of the objects to be identified, whilst observing the procedure on the monitor; needless to say, use might be made of other input devices, such as a mouse, in place of the keyboard 5.

The memory 6 dialogues not only with the matcher 9, which is the decision-making element, but also with the contour and features extraction modules 7 and 8 respectively, in order to ensure that the entire recognition processing operation is effected with the reference model continuously imposed. By means of such a system, moreover, it becomes possible to pin-point certain essential details of the object utilizing windows, i.e. concentrating on precisely defined areas, in such a way as to highlight any particularly salient features of the object still further, without the need to scan the entire image pixel by pixel.

The first extraction module 7 supplies a plurality of contour points that can be displayed on the monitor 3. A suitable indicator incorporated into this same module 7 permits of addressing the video buffer, internally of the relative interface 2, to the end of singling out those areas registering a more pronounced gradient. Further elimination of non-essential data will ultimately reveal the most significant geometrical features (vertices).

In effect, the process is one of highlighting a series of points at which the more superimposable geometrical features of the imaged object and the construct happen to coincide.

Advantageously, the features extraction module 8 effects a curvature analysis on the contours given by the first extraction module 7, segmenting and isolating those geometrical features (straight lines, angles, circles etc...) best adaptable to the operation of superimposing the object imaged by the camera on those archived in the memory 6.

From here, the procedure passes to the matcher 9, which is in receipt of the features adopted for reference purposes, that is, of the model supplied by the memory 6, and from the features extraction module 8, those items of data which in the course of the comparisons effected thus far have coincided with the model.

In short, the device conducts a comparison between image and model, whereupon only those parts which can be faultlessly superimposed on the basis of the selected geometrical and graphic features, and of pin-pointed highlights (windowed features, if any), can qualify as reflecting the image returned by the camera 1.

At this point, by way of the microprocessor not shown in the diagram, the protocol converter 10 will supply those commands which result in display of the definitive image on the monitor 3, utilizing the video interface 2, and commands converted from the definitive data corresponding to the recognized and localized object, destined for the robots or other external equipment connected to the device.

Clearly, the comparison procedures fall within the capabilities of the software or operating program package used by the device, and will be embodied as a plurality of distinct processing units.

In essence, the electronic device according to the invention follows a procedure comprising an initial or preparatory operation of simulating objects to be imaged by at least one television camera, for the purposes of recognition and localization, and memorizing the simulated models, and a further operation of processing and comparing the image of an object targeted by the camera for recognition and localization and matching it to a corresponding model. The initial simulation operation includes the steps of entering and defining parameters and specifications serving to reflect the graphic and geometrical features of a reference model for the object to be recognized and localized; generating, suitably modifying and positioning the relative geometrical features, in the form of elementary geometrical figures; and memorizing the parameters, specifications and graphic and geometrical features of the reference model thus defined. The subsequent processing operation includes the further steps of analyzing and defining the potential contours of an object targeted by the camera for recognition and localization according to the memorized parameters, specifications and features of the reference models and, using these same parameters, specifications and features of the memorized reference models, analyzing the curvature of the defined contours and extracting those geometrical features presented by the image that permit of correlation to memorized features of the reference models; comparing the reference model and the graphic and geometrical features of the object targeted by the camera for recognition and localization; and finally, having established a match, rotating and traversing the image of the object in relation to the reference model to determine its localization.

Thus, the stated objects are realized according to the present invention. In fact, the procedure is one whereby the software or operating program, run by hardware consisting in a microprocessor and the other parts mentioned, including the camera and monitor, permits of effecting a comparison markedly superior to that enabled by conventional systems, in terms both of speed and of quality.

Moreover, the simulation is an intelligent and active process inasmuch as each discrete operation executed by the contour extraction module 7 and features extraction module 8 takes account of the encoded model stored in the memory 6.

The foregoing description implies no limitation; the circuitry of the device might vary in a final embodiment, likewise the parametric and programming features of the software utilized.

## Claims

1) An electronic device for viewing, recognizing and localizing objects, of the type comprising at least one television camera by means of which to generate images, connected through a video interface to a monitor, and means by which reference objects are archived, compared and matched with objects imaged via the camera,

characterized

in that the archiving, comparison and matching means comprise graphic simulation means capable of assigning geometrical features to reference objects with which objects imaged by way of the camera are compared, and means by which to observe and display graphic and geometrical features of the objects to be recognized and localized according to parameters and specifications established in the archived reference models and referred to at successive steps of the operating procedure; and

in that the viewing, recognition and localization procedure is run entirely by an operating program and controlled by a microprocessor connected to the various means of the device by way of a dedicated bus.

2) An electronic device as in claim 1, wherein the camera, video interface and monitor form a part of graphic simulation means further comprising:

-a keyboard by way of which to enter and define parameters and specifications in respect of the graphic and geometrical features of the reference model for an object to be targeted for recognition and localization;

-a Computer Aided Design module, operated through the keyboard, by means of which to generate, modify and position the geometrical features of an object targeted for recognition and localization, in the form of elementary geometrical figures; and

-a memory in which to archive and from which to access the parameters, specifications and graphic and geometrical features of a reference model constructed with the aid of the CAD module.

3) An electronic device as in claim 1, wherein the camera, video interface and monitor form a part of means by which to observe and display geometrical and graphic features, further comprising:

-a contour extraction module designed to analyze the image of an object targeted by the camera for recognition and localization and, on the basis of the parameters, specifications and features of the archived reference objects, to define potential matching contours exhibited by the object imaged via the camera;

-a features extraction module designed to analyze the curvature of the potential contours defined by the contour extraction module on the basis of the selfsame parameters, specifications and features of the archived reference objects, and to extract from the contours such geometrical features of the image as can be correlated to those of the reference models.

4) An electronic device as in claim 1, wherein means by which to archive, compare and match reference objects with imaged objects further comprise a matcher, designed to effect a comparison between the reference model, as defined and memorized by the graphic simulation means and the means utilized in assigning geometrical features, and the graphic and geometrical features of the image returned by the camera, as defined by the contour and features extraction modules, and having established that the features correspond, to calculate rotary and linear movement of the image in relation to the reference model to the end of determining the localization of the object.

5) An electronic viewing, recognition and localization device as in claim 1, further comprising a protocol conversion unit by which incoming external commands are translated into commands intelligible to the program utilized by the device, and response data from the device is translated into output commands.

6) An operating procedure for viewing, recognizing and localizing objects,

characterized

in that it comprises the operations, executed by a control program, of:

-effecting a graphic simulation of the images of objects targeted by at least one television camera for recognition and localization, and memorizing the models thus constructed;

-processing, comparing and matching the image of an object targeted for recognition and localization by the camera with the memorized models, according to parameters and specifications established during the simulating operation and referred to at each discrete processing step of the procedure.

7) A process as in claim 6, wherein graphic simulation comprises the steps of:

-entering and defining parametric and specific data in respect of the graphic and geometrical features of the reference model for an object to be imaged for recognition and localization,

-generating, suitably modifying and positioning the geometrical features of the reference model for the object to be imaged, using elementary geometrical figures;

-memorizing the parameters, specifications and graphic and geometrical features of the reference model thus defined.

8) A procedure as in claim 6, wherein the processing, comparing and matching operation comprises the steps of:

-analyzing and defining the potential contours of an object targeted by the camera for recognition and localization, according to the memorized parameters, specifications and features of the reference models;

-analyzing the curvature of the defined contours and, according to the parameters, specifications and features of the memorized reference models, extracting those geometrical features presented by the image that permit of correlation to memorized features of the reference models;

-comparing the reference model and the graphic and geometrical featured of the object targeted by thecamera for recognition and localization;

-calculating rotary and linear movement of the image of a successfully matched object in relation to the reference model, in order to determine its localization.